# EUROPÄISCHE PATENTSCHRIFT

(11) **EP 1 100 103 B1**
(45) Veröffentlichungstag und Bekanntmachung des Hinweises auf die Patenterteilung: **21.04.2004**
(21) Anmeldenummer: 00250371.2
(22) Anmeldetag: 09.11.2000
(51) Int. Cl.: H01F 7/18

(54) **Schaltungsanordnung zum Betrieb eines Arbeitsmagneten**
Circuit arrangement for operating an electromagnet
Circuit pour le fonctionnement d'un électro-aimant

(30) Priorität: 12.11.1999 DE 19956127
(43) Veröffentlichungstag der Anmeldung: 16.05.2001
(73) Patentinhaber: SIEMENS AKTIENGESELLSCHAFT, 80333 München (DE)
(72) Erfinder: Baumgaertl, Ulrich, 13599 Berlin (BE); Neidhardt, Klaus, 14195 Berlin (DE); Roehl, Wolfgang, 13503 Berlin (DE)

(56) Entgegenhaltungen:
- DE-A- 19 742 038
- DE-A- 19 806 821

## Beschreibung

Magnetspulen, mit denen ein beweglicher Anker betätigt wird, werden in Relais, Trenn- und Leistungsschaltern aller Spannungsebenen zur direkten oder indirekten Auslösung der Schaltbewegung von mechanischen Schaltkontakten benötigt. Zum Auslösen der Ankerbewegung wird eine bestimmte Antriebsenergie und Antriebsleistung und somit ein bestimmter Strom benötigt, der, wenn der Anker im angezogenen Zustand dann durch weitere elektrische Erregung der Magnetspule gehalten werden soll, reduziert werden kann, da zum Halten des Ankers aufgrund des im angezogenen Zustand verringerten magnetischen Widerstandes weniger Kraft und somit weniger Leistung benötigt wird. Die Erfindung bezieht sich auf solche Magnetspulen, deren Anker nach dem Anziehen mit reduzierter Halteleistung gehalten wird.

Zur Reduzierung der Halteleistung sind geeignete elektronische Vorschalteinrichtungen bekannt. Dabei wird der Umstand ausgenutzt, dass der Haltestrom eines guten Elektromagnetsystems nur 10% des Anzugsstromes beträgt. Durch die Leistungsbeziehung N = I² / R ergibt sich damit eine Reduzierung der Halteleistung auf 1%. Als Vorschalteinrichtung wird z. B. ein Schaltnetzteil-eingesetzt, das den Betriebsstrom im Spulenkreis periodisch unterbricht und so den zeitlich gemittelten Stromwert und damit die Halteleistung deutlich reduziert. Eine solche Lösung ist beispielsweise aus DE 197 42 038 A bekannt.

Derartige Vorschalteinrichtungen können indessen dann nicht eingesetzt werden, wenn die Magnetspule mit einer Überwachungsschaltung versehen wird, mit der diese im nichtangesteuerten Betriebsfall auf einen intakten Zustand hin überwacht wird. Bei einer solchen Überwachungsschaltung, wie sie z.B. aus nächstliegendem Stand der Technik DE 198 06 821 A bekannt ist, wird eine Gleichspannung, die weit unter der eine Auslösung bewirkenden Betriebsspannung für den Magnetanker liegt, im ausgeschalteten Zustand der Magnetspule anstelle der Betriebsspannung auf den Spulenkreis aufgeschaltet. Mittels einer Strommessung im Magnetspulenkreis wird dann der Widerstand der Magnetspule überwacht. Ändert sich der Widerstandswert durch einen Fehler in oder an der Magnetspule, beispielsweise wegen eines Drahtbruchs oder eines Windungsschlusses in der Wicklung oder wegen einer fehlerhaften Verbindung an den Spulenanschlüssen, so erfolgt eine Meldung und ggf. eine weitere Schutzmaßnahme je nach Art des Einsatzes des Schaltgeräts, dessen Magnetspule überwacht wird. Würde im Magnetspulenkreis nun noch eine Vorschalteinrichtung mit ihren stromreduzierenden Schaltmitteln liegen, deren stromabhängiger Widerstand in dem Bereich der geringen Ströme im Fall der Überwachung relativ hoch ist, so wäre der gemessene Strom für die Beurteilung des Zustandes der Magnetspule nicht mehr auswertbar. Gar nicht möglich wäre eine Strommessung mit einem Schaltregler als Vorschalteinrichtung, wie ihn die bereits oben erwähnte DE 197 42 038 A zeigt, sofern die Überwachungsschaltung am Schaltungseingang, das heißt außen an einer bestehenden Baueinheit von Arbeitsmagnet und Vorschalteinrichtung, angreifen soll, da in diesem Fall der Stromweg bei nicht angesteuertem Arbeitsmagneten ganz unterbrochen ist.

Bisher werden deshalb Magnetspulen, die mit einer Spulenüberwachung betrieben werden, nicht mit Einrichtungen zur Reduzierung der Halteleistung versehen. Vielmehr bleibt im Dauerbetrieb die volle Anzugsleistung, also etwa der 100fache Wert der nötigen Halteleistung, auch als Halteleistung angelegt. Die Magnetspulen müssen deshalb wärmetechnisch entsprechend ausgelegt werden.

Die Erfindung geht somit von einer Schaltungsanordnung zum Betrieb eines Arbeitsmagneten aus, der eine Magnetspule und einen durch Erregung der Magnetspule zu betätigenden Anker sowie einen Prüfstromkreis zur Überwachung des Zustandes der Magnetspule aufweist, der durch einen Umschalter anstelle einer Betriebsspannungsquelle an die Magnetspule des Arbeitsmagneten anzulegen ist. Der Erfindung liegt die Aufgabe zugrunde, eine Anordnung anzugeben, die die Überwachung der Magnetspule auch im Zusammenwirken mit einer Schaltung zur Leistungsreduzierung gestattet.

Erfindungsgemäß wird die gestellte Aufgabe dadurch gelöst, daß in den Stromkreis der Magnetspule ein selbstleitender elektronischer Schalter geschaltet ist, der mit einer Ansteuerschaltung verbunden ist, die den selbstleitenden elektronischen Schalter nach erfolgtem Anzug des Ankers durch periodische Ansteuerung in einen leistungsreduzierten Betrieb steuert.

Die Erfindung beruht auf der Auswahl eines bisher für die Leistungsreduzierung an Arbeitsmagneten nicht eingesetzten Bauelementes. Selbstleitende elektronische Schalter haben nämlich die Eigenschaft, daß ihr Bahnwiderstand im nicht angesteuerten Zustand, d.h. im Ruhezustand, sehr gering ist. Daher kann ein Prüfstromkreis unter Einbeziehung des elektronischen Schalters geschaffen werden. Bisher benutzte elektronische Schalter sind demgegenüber im nicht angesteuerten Zustand nichtleitend und erlauben somit keine Messung der Magnetspule.

Im Rahmen der Erfindung kann der Prüfstromkreis eine Hilfspannungsquelle, einen in Reihe mit der Hilfsspannungsquelle geschalteten Prüfwiderstand sowie eine die Spannung am Prüfwiderstand erfassende Auswertungsschaltung aufweisen. Auf einen ordnungsgemäßen Zustand der Magnetspule kann geschlossen werden, wenn über den Prüfwiderstand ein Strom bestimmter Höhe fließt und der Auswertungsschaltung dementsprechend eine Spannung bestimmter Höhe zugeführt wird.

Die Schaltungsanordnung nach der Erfindung kann zweckmäßig so gestaltet sein, daß mittels eines Umschalters an den Arbeitsmagnet wahlweise eine Betriebsspannungsquelle oder der die Hilfsspanungsquelle enthaltende Prüfstromkreis anlegbar ist. Der Benutzer hat es daher in der Hand, eine gewünschte Prüfung jederzeit vornehmen zu können.

Die Erfindung soll nachstehend anhand eines Ausführungsbeispiels näher erläutert werden. Die zugehörige Zeichnung zeigt ein Prinzipschaltbild der erfindungsgemäßen Schaltungsanordnung.

Ein Arbeitsmagnet 1, z. B. für einen Spannungs- oder Unterspannungsauslöser eines Niederspannungs-Leistungsschalters, weist eine Magnetspule 2 und einen schematisch angedeuteten Anker 3 auf. Die Magnetspule 2 wird mit einer BetriebsGleichspannung betrieben, die von einer Betriebsspannungsquelle 4 mittels einer Gleichrichterbrücke 5 bereitgestellt wird. Die Betriebsspannungsquelle 4 wird in bekannter Weise durch eine hier nicht gezeigte Schalteinrichtung, z. B. im Falle eines Unterspannungsauslösers durch eine Spannungsmesseinrichtung, erst zu einem Auslösezeitpunkt wirksam. Um einen leistungsreduzierten weiteren Betrieb der Magnetspule zu ermöglichen, nachdem der Anker 3 betätigt wurde, enthält der Stromkreis der Magnetspule 2 einen selbstleitenden elektronischen Schalter 6 in der Gestalt eines selbstleitenden Leistungs-FET und einen Strommesswiderstand 7. Der elektronische Schalter 6 erhält Steuersignale von einer Ansteuerschaltung 8 in der Weise, daß nach erfolgtem Anzug des Ankers 3, die von der Ansteuerschaltung 8 durch Auswertung des Stromsignals vom Strommesswiderstand 7 erkannt wird, durch Aufgeben einer Steuerspannung auf die Basis des selbstleitenden elektronischen Schalters 6 dieser periodisch in den hochohmigen Zustand gebracht wird. Damit wird die Leistung für den Haltezustand der Magnetspule 2 auf einen Bruchteil der Anzugsleistung reduziert.

Liegt an der Steuerelektrode (Gate) des elektronischen Schalters 6 kein Steuersignal an, so liegt neben der Gleichrichterbrücke 2 nur der selbstleitende elektronische Schalter 6 und der sehr kleine Strommeßwiderstand 7 im Stromkreis der Magnetspule 2. In diesem Zustand kann mittels eines Umschalters 10 ein Prüfstromkreis aktiviert werden. Dieser umfaßt eine als Batterie angedeutete Hilfsspannungsquelle 11 und einen Prüfwiderstand 12, parallel zu dem eine Auswertungsschaltung 13 geschaltet ist, ferner die Gleichrichterbrücke 5, die Magnetspule 2, den elektronischen Schalter 6 und den Strommeßwiderstand 7. Da nur die Magnetspule 2 einen durch ihren Zustand gegebenen variablen Widerstand und alle übrigen Elemente des Prüfstromkreise einen festen und sehr niedrigen Widerstandswert aufweisen, vermag die Auswertungsschaltung 13 anhand der vom Prüfwiderstand 12 zugeführten Spannung zu erkennen, ob sich die Magnetspule 2 in einem ordnungsgemäßen Zustand befindet. Auf diese Weise kann eine Anordnung zur Magnetspulenüberwachung gemeinsam mit der Anordnung zur Reduzierung der Halteleistung angewendet werden.

Von Vorteil erweist sich außerdem, dass der selbstleitende elektronische Schalter 6 zum Auslösezeitpunkt nicht angesteuert sein muss, so dass sich eine Entlastung der Bauelemente ergibt. Der Bahnwiderstand beträgt nur 1 Ohm oder weniger und ist daher im Verhältnis zum Widerstand der Magnetspule 2 vernachlässigbar klein.

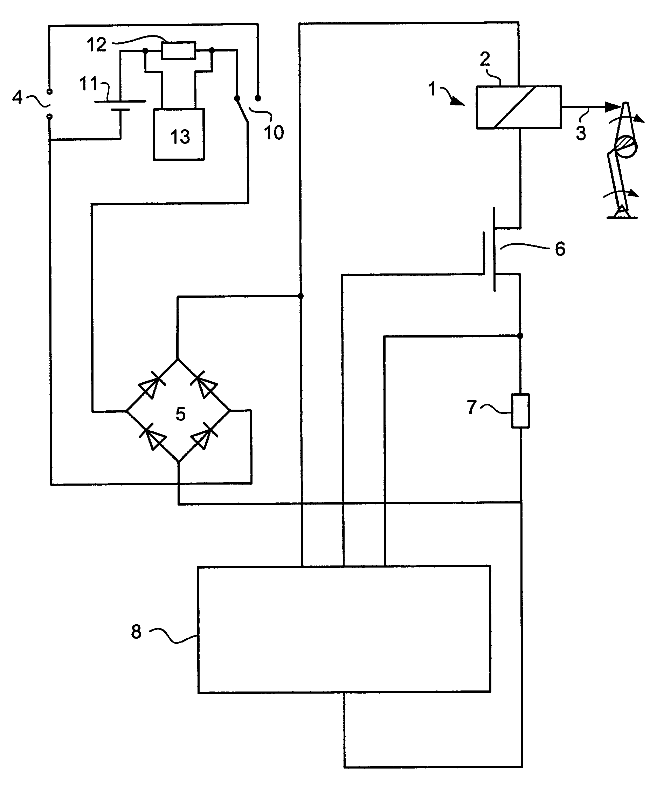

## Patentansprüche

1. Schaltungsanordnung zum Betrieb eines Arbeitsmagneten (1), der eine Magnetspule (2) und einen durch Erregung der Magnetspule (2) zu betätigenden Anker (3) aufweist, wobei mittels eines Umschalters (10) wahlweise eine Betriebsspannungsquelle (4) oder ein Prüfstromkreis zur Überwachung des Zustandes der Magnetspule (2) an die Magnetspule (2) des Arbeitsmagneten (1) anlegbar ist,
**dadurch gekennzeichnet, dass**
in den Stromkreis der Magnetspule (2) ein selbstleitender elektronischer Schalter (6) geschaltet ist, der mit einer Ansteuerschaltung (8) verbunden ist, die den selbstleitenden elektronischen Schalter (6) nach erfolgtem Anzug des Ankers (3) durch periodische Ansteuerung in einen leistungsreduzierten Betrieb steuert.

2. Schaltungsanordnung nach Anspruch 1,
**dadurch gekennzeichnet, dass**
der Prüfstromkreis eine Hilfspannungsquelle (11), einen in Reihe mit der Hilfsspannungsquelle (11) geschalteten Prüfwiderstand (12) sowie eine die Spannung am Prüfwiderstand (12) erfassende Auswertungsschaltung (13) umfaßt.

3. Schaltungsanordnung nach Anspruch 1 oder 2,
**dadurch gekennzeichnet, dass**
der selbstleitende elektronische Schalter (6) ein selbstleitender Leistungs-FET ist.

## Claims

1. Circuit arrangement for operating an electromagnet
(1) having a magnet coil (2) and an armature (3) which may be actuated by exciting the magnet coil (2), in which case it is possible, by means of a changeover switch (10), to optionally connect, to the magnet coil
(2) of the electromagnet (1), an operating voltage source (4) or a test circuit for monitoring the state of the magnet coil (2),
**characterized in that**
the circuit of the magnet coil (2) has connected to it an electronic switch (6) which is normally on and is connected to a drive circuit (8) which controls the normally-on electronic switch (6), once the armature
(3) has pulled in, by periodically driving it to reduced-power operation.

2. Circuit arrangement according to Claim 1,
**characterized in that**
the test circuit comprises an auxiliary voltage source (11), a test resistor (12) connected in series with the auxiliary voltage source (11), and an evaluation circuit (13) which detects the voltage across the test resistor (12).

3. Circuit arrangement according to Claim 1 or 2,
**characterized in that**
the normally-on electronic switch (6) is a normally-on power FET.

## Revendications

1. Circuit pour faire fonctionner un électro-aimant (1), qui a une bobine (2) et une culasse (3) pouvant être actionnée par une excitation de la bobine (2), au choix une source (4) de tension de fonctionnement ou un circuit de contrôle de l'état de la bobine (2) pouvant être appliqué au moyen d'un inverseur (10) à la bobine (2) de l'électro-aimant (1),
**caractérisé en ce que** dans le circuit de la bobine (2) est monté un commutateur (6) électronique à appauvrissement, qui est relié à un circuit (8) de commande qui met le commutateur (6) électrique à appauvrissement, après que la culasse (3) a été attirée par commande périodique, dans un état de fonctionnement à puissance réduite.

2. Circuit suivant la revendication 1,
**caractérisé en ce que** le circuit de contrôle comprend une source (11) de tension auxiliaire, une résistance (12) de contrôle montée en série avec la source (11) de tension auxiliaire, ainsi qu'un circuit (13) d'exploitation relevant la tension aux bornes de la résistance (12) de contrôle.

3. Circuit suivant la revendication 1 ou 2,
**caractérisé en ce que** le commutateur (6) électronique à appauvrissement est un transistor à effet de champ de puissance à appauvrissement.
